# EUROPEAN PATENT APPLICATION

(11) **EP 2 264 332 A2**
(43) Date of publication of application: **22.12.2010**
(21) Application number: 10382056.9
(22) Date of filing: 15.03.2010
(51) Int. Cl.: F16G 11/12, F16G 13/12

(54) **Side anchor stretcher for filiform elements and method of production of said stretcher**

(30) Priority: 16.03.2009 AR P090100923; 16.03.2009 AR P090100924; 16.06.2009 US 485757
(71) Applicant: Montebon, S.A., Montevideo (UY)
(72) Inventor: Fernandez, Eduardo Roberto, Buenos Aires (AR); Olivera, Cesar Hugo, Buenos Aires (AR)
(74) Representative: Curell Aguilà, Marcelino

(57) **Abstract**

An anchor stretcher device includes a wind up reel (7) having a false retention wall (9) which is mounted in a wall mount opening (9a) on one end of the device. The wind up reel includes a command head (11) on a rotary body (6) which is engageable with a cramp (10a) (9c) able to prevent its rotation and that possesses, at least, an anchor opening (9b) for a filiform element (30) to be stretched. Winding for stretching is performed by turning the command head (11). Since the anchor opening (9b) is situated laterally on the false retention wall (9), the filiform element (30) winds up in a very even manner on the wind up reel (7). A production method is described which includes a series of steps through which component parts of the anchor stretcher device are produced. -

## Description

### BACKGROUND OF THE INVENTION

### Field of the Invention

The present invention relates to the field of construction structures such as fences, wiring, wire laying in general, covers and any other arrangement formed by filiform elements capable ofbeing stretched.

More particularly, the present invention relates to a side anchor stretcher device for filiform elements which is simpler than conventional stretchers; is larger, includes fewer parts, and has a low manufacturing cost. The present invention also refers to a specific method of production that allows simplification and cost reduction of its manufacture.

### Description of Prior Art

Up to the present time, stretcher devices by the same inventors are known, as disclosed by the Argentine patent applications No. AR041817B1, P040101190, and P050100600. In these cases, the anchors are arranged on the rotary body and not on the side retention wall. In addition, the latter is conformed in the own rotary body which makes the production process complex and expensive.

Moreover, on the one hand, other means disclosed by Argentine patent documents No. 476 (Bonifacio Medina Santurio, 11/17/1885), No. 483 (Bonifacio Medina Santurio, 11/30/1885), No. 885 (Francisco Solans, 05/19/1890), and No. 5373 (Pedro Zaffaroni, 08/02/1907) are known. On the other hand, stretcher devices, such as those disclosed by US Patent Nos. 2,451,389; 2,464,832; 2,519,921; 2,563,129; and 4,008,880 are known.

These stretcher devices, like most of the ones disclosed subsequently, are based on a rotary reel mounted on two side walls. As a consequence of this, these stretcher devices are very large as their main body forms a kind of fork or support fence on which the side walls, the ends of the axis of the reel are mounted, in a rotary manner, on which the filiform elements to be stretched are wound up.

These conventional devices (also known as tourniquets) are typically formed by several pieces which facilitate the appearance of failures and increase their production costs.

On the other hand, other stretching devices are known, such as those disclosed by Argentine patents No. 4142 (Diego Roy, 04/06/1905) and No. 4652 (William Nepean Hutchinson, 05/18/1906). There are also other stretching devices known, such as those disclosed by US Patents Nos. 3,213,899; Des. 234,903; and 6,435,478. All these stretcher devices are less bulky than those based on the double rotary mounting in two side walls, however they lack a reel capable ofturning round or rotating relative to the main support piece.

The stretcher devices disclosed by documents AR-P030103853; AR-P040101190; US7,406,752; and AR-P050100600 by the same inventors of the present invention are also known; and, although they disclose reel stretchers having a flat body, these devices lack a side anchor and a false retention wall, to which we should add that these constitute complexities which do not allow using a method like the present one to reduce costs and increase the production of stretcher devices per time unit.

Regarding the insulator member, up to date several insulators are known. For example, the patent design document US Des. 535,616S is based on a weak structure wherein there is an elongated opening but as an overlapping cross-shaped opening component surrounded by thin walls. Due to such a configuration, the structure gives way and is distorted when subjected to strain. In addition, its traction end adjacent to the opening, has not the suitable shape to fit into a hook stretcher. Additionally, it does not have insulating fences to protect the electrified conductor.

The document US Patent No. 4,061,873 shows a complex insulator that operates in a different manner and which structure is very fragile.

Also known are the insulators disclosed by documents AR-P040101190; US7,406,752; and AR-P050100600, by the same inventor of the present invention which show a small insulator that fits in the hook type openings of the stretcher devices. This insulator has intercrossed or overlapping passages that subject the intermediate part of its structure to compression efforts.

In general, most of the known insulators have intercrossed or overlapping passages among which a separating portion forms, subject to compression efforts. This results in extremely dangerous conditions when dealing with electrified conductors because as environmental conditions deteriorate, the insulating structure, especially when composed of plastic materials, tends to break and cause short circuits or electric conduction in parts that usually should be insulated.

Also known are insulators that are provided with throats for the electrified conductors, but most of them have their passages intercrossed or overlapped, work at compression and are very bulky.

One of the advantages of the present stretcher device is that its rotary part has been simplified to the extent ofobtaining a much lower cost than the other known stretching device.

One of the advantages that has allowed simplification is to delete a large portion of the tooling of the rotary part because the threading opening(s) which were previously practiced in the prior art reel have been eliminated in the present invention.

Another object that has allowed simplification is the incorporation of a false side retention wall because it is a very easily tooled piece and which permits several embodiments.

A further advantage of the present invention is that the aboye mentioned false side retention wall does not need several holes, since the same opening serves for its mounting as well as for providing the anchor to the filiform element.

Still another advantage at the present invention is the lower depth of the anchor opening in the false side retention wall which facilitates threading and allows a more uniform winding up of the filiform elements in the reel.

Furthermore, the present stretcher device is much simpler than other stretchers with similar functional capabilities.

This construction simplicity and the presence of a smaller number of assembly pieces reduce the possibilities offunctional failures, either before or after installation of the device.

The fact that the mobile reel has only one rotary mounting in a main piece which is substantially flat, such a configuration reduces its volume considerably, something that has incidence on the lower weight to be tolerated by the application wiring and the packaging and transport as well.

The simplicity of the assembly considerably lowers manufacturing costs. In addition, the smaller amount of material used in the assembly lowers the costs of the assembly or device.

A further advantage is that the simplicity of this stretcher device corre lates with the easiness ofinstallation and operatation, an extremely appreciated quality for rural tasks.

Another advantage is that by means of the addition of an insulating member, it becomes suitable for electrified wiring laying.

Finally, it should be highlighted that the present stretcher device is suitable for the most varied applications in which filiform elements to be strained are present. This is the case of rural wiring, all types of fences, wiring lying to support covers, such as canvases or sun visor weaves, etc.

Regarding the insulator member, an advantage is that it has an elongated anchor passage combined with a first traction portion which allows engaging with flat hook of the stretcher on which anchor bottom, fits the aboye mentioned traction portion.

Another advantage is that the insulating member and the elongated anchor passages therein are not intercrossed or overlapped, so it is prevented that the separating portion is subject to compression efforts. This structure prevents, particularly in the case of a plastic material insulator, that the damages due to environmental conditions combine with the compression efforts to cause a breaking of the aboye mentioned separating portion, which would produce a short circuit or electric conduction in parts which usually should be insulated.

A further advantage is that the presence of the insulating fences or wall and the thickening edges, permits obtaining an insulator member having a main body which is not bulky in size while maintaining structural resistance and integrity during usage.

Another further advantage is that, having a flat main body, the separating portion has its structural resistance capacity to traction reinforced by the supplementary action of the lateral rims of said main body.

Another advantage is that the higher height of the insulating fences or walls, in relation to the thickening edges, ensures an adequate insulation of the electrified conductors, which remain adequately arranged within the channeling throats and without any possibility of accidental contact with the anchor hook that goes through the elongated anchor passage or opening.

Another advantage is that, since the two passages or openings, the insulating and elongated anchor, are open on the same faces of the main body, the placement operations are easier because the insulator must not be turned round itself to connect the filiform elements and the stretcher hook.

### DESCRIPTION OF THE DRAWINGS

For better clearness and understanding of the object of the invention, it is illustrated in several drawings wherein it has been represented in one of its preferred embodiments, in an illustrative manner but without limitation:
Figure 1 is a perspective view of the present side anchor stretcher device;
Figure 2 is a lower view, elevated, of the stretcher means of Figure 1;
Figure 3 is a right lateral view, elevated, of the stretcher device of Figure 1;
Figure 4 is a left lateral view, elevated, of the stretcher device of Figure 1;

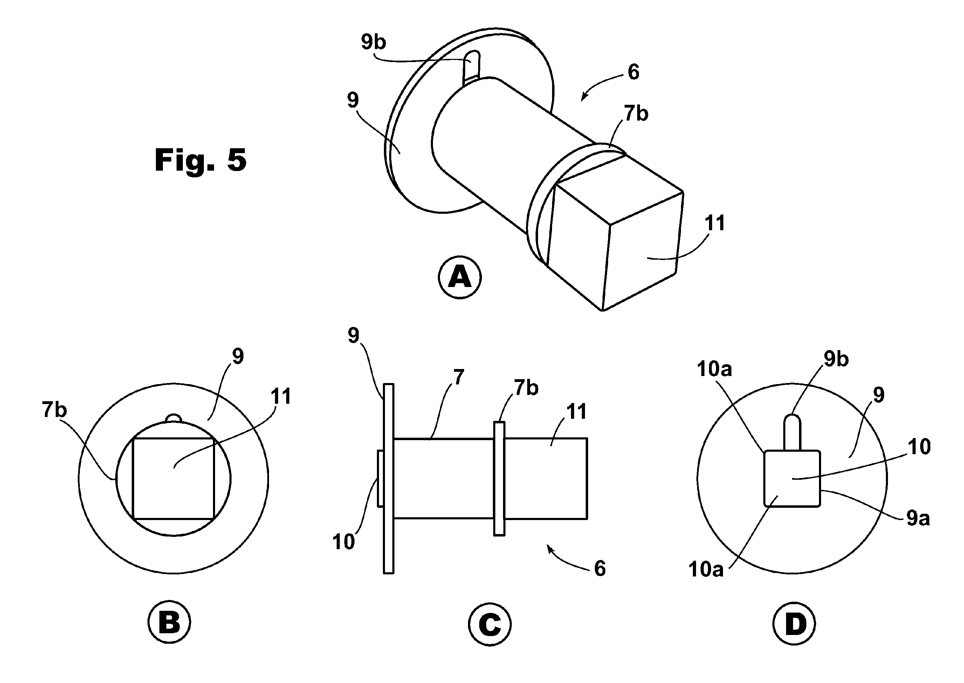

Figure 5 comprises drawings A, B, C and D, where:
   Drawing 5A is a perspective view of the rotary part with the false retention wall mounted;
   Drawing 5B is right lateral view, elevated, of the rotary part wherein its command head can be observed;
   Drawing 5C is a front elevated view wherein the reel conformation can be observed; and
   Drawing 5D is a left lateral view, elevated, of the rotary part wherein its mounting end of the false retention wall is observed;

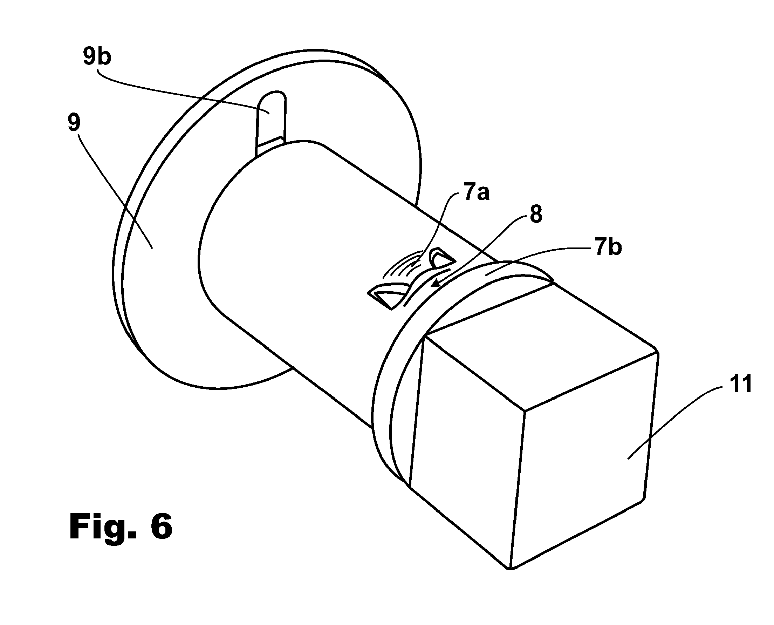

Figure 6 is a perspective view of the rotary body position of the present invention;

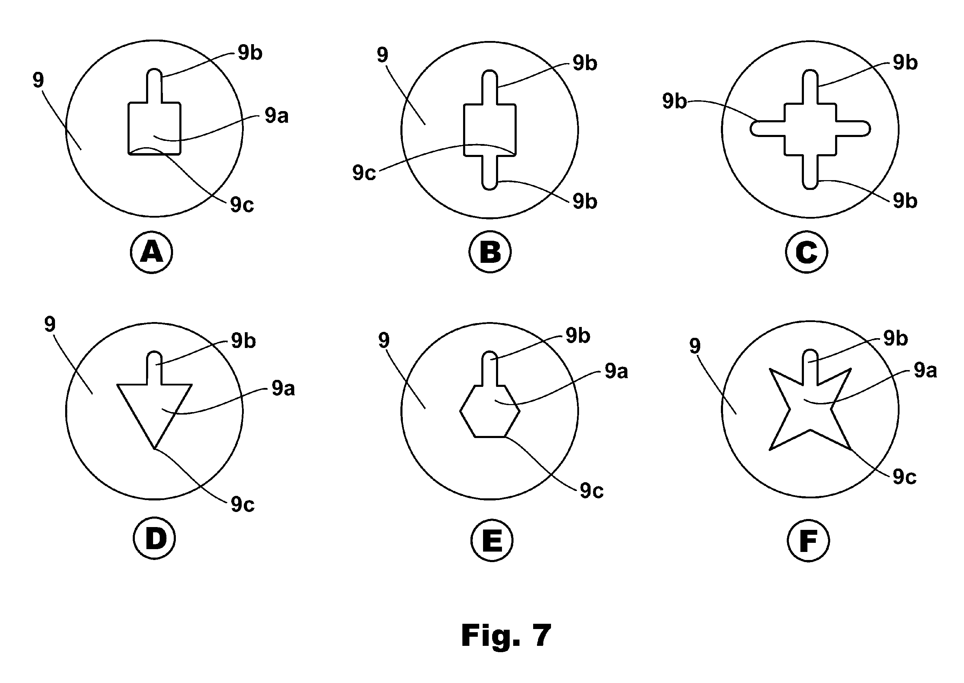

Figure 7 comprises drawings A, B, C, D, E and F that, in each front, elevated view, illustrate some of the various embodiments of the false retention wall;

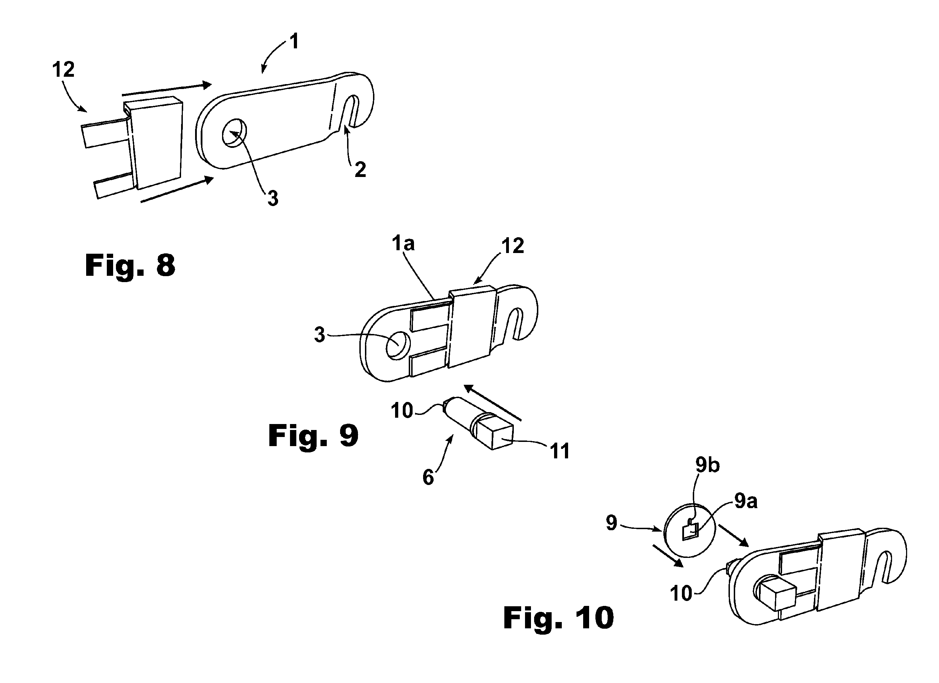

Figures 8, 9, 10, 11, 12, 13, 14, and 15 illustrates a production sequence of the present stretcher device;
Figure 8 is a perspective right lateral view that illustrates how the runner mobile cramp is inserted in the main body;
Figure 9 is another perspective right lateral view that illustrates the runner mobile cramp in the main body and the position of the rotary body part or position;
Figure 10 is another perspective right lateral view that illustrates the rotary part inserted in the rotary mount opening and the position of the false retention wall in front of the retention end;

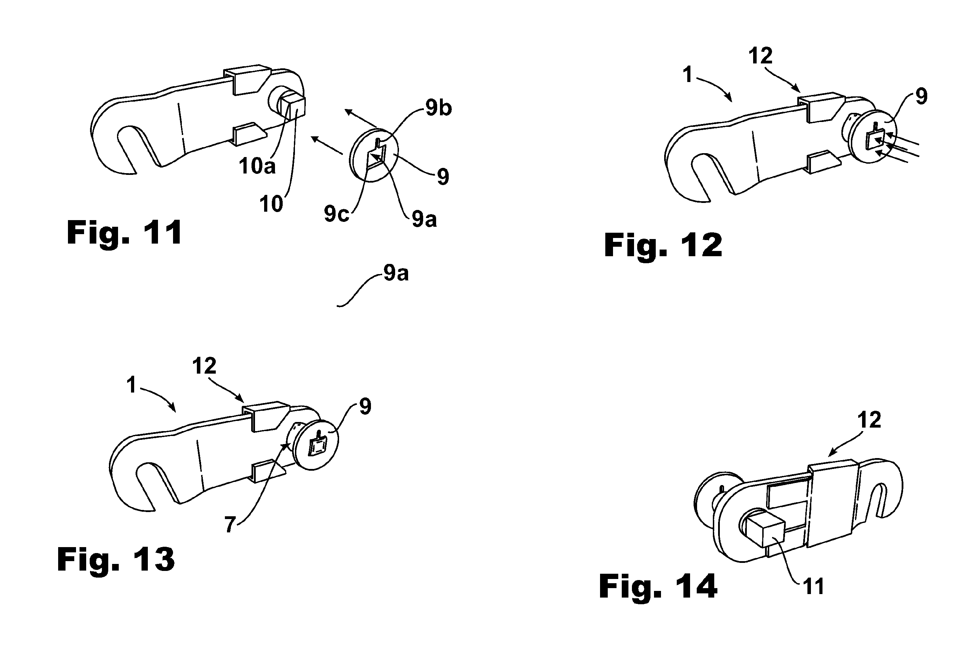

Figure 11 is a perspective left lateral view that, from that side, illustrates the position of the false retention wall in front of the retention end;
Figure 12 is another perspective left lateral view that illustrates the placement of the false retention wall in the retention end;
Figure 13 is a further perspective left lateral view that illustrates the fixation of the false retention wall in the retention end;
Figure 14 is a perspective right lateral view that illustrates the stretcher already assembled;

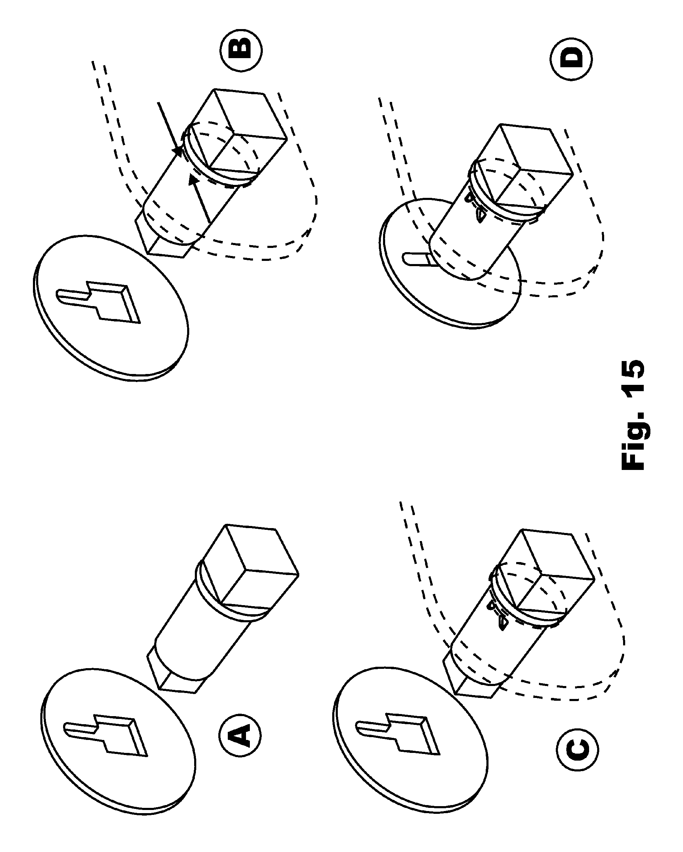

Figure 15 comprises drawings A, B, C, and D, where:
   Drawing 15A is a perspective view of the rotary part and the false retention wall one in front of the other;
   Drawing 15B is another perspective view wherein the position in which ledges are conformed in the rotary part can be observed;
   Drawing 15C is a further perspective view wherein the ledges for the bearing, already conformed on the reel can be observed; and
   Drawing 15D is a further perspective view wherein the placement of the false retention wall can be observed;

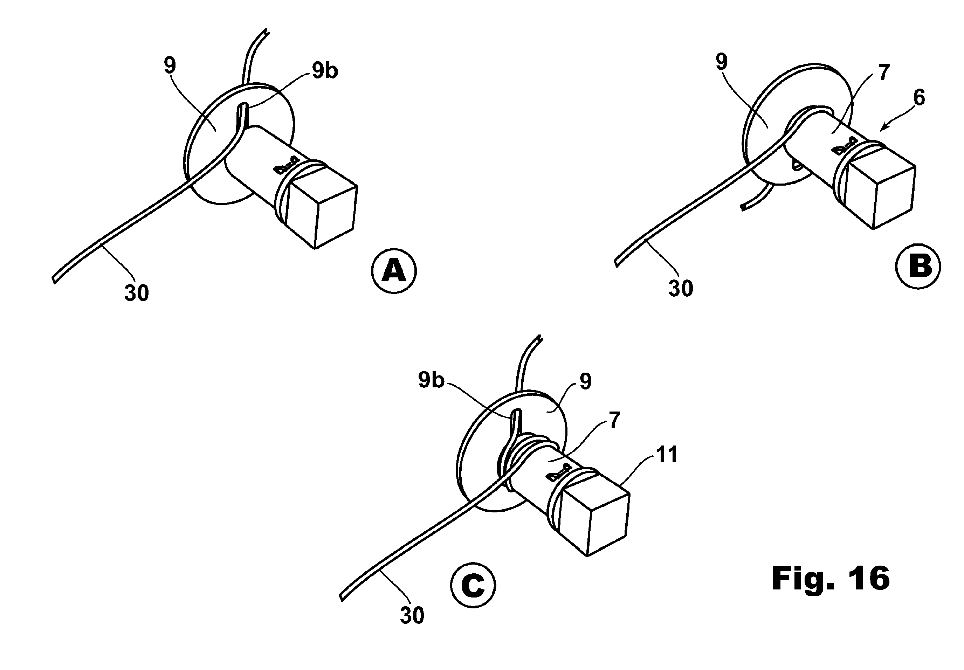

Figure 16 comprises drawings A, B, and C, where:
   Drawing 16A is a perspective view of the rotary part in which the threading of the end of the filiform element in the side anchor opening can be observed;
   Drawing 16B is a further perspective view of the rotary part that shows how the filiform element is anchored after half turning on the reel; and
   Drawing 16C is a further perspective view of the rotary part that shows how the filiform element is wound up around the reel;

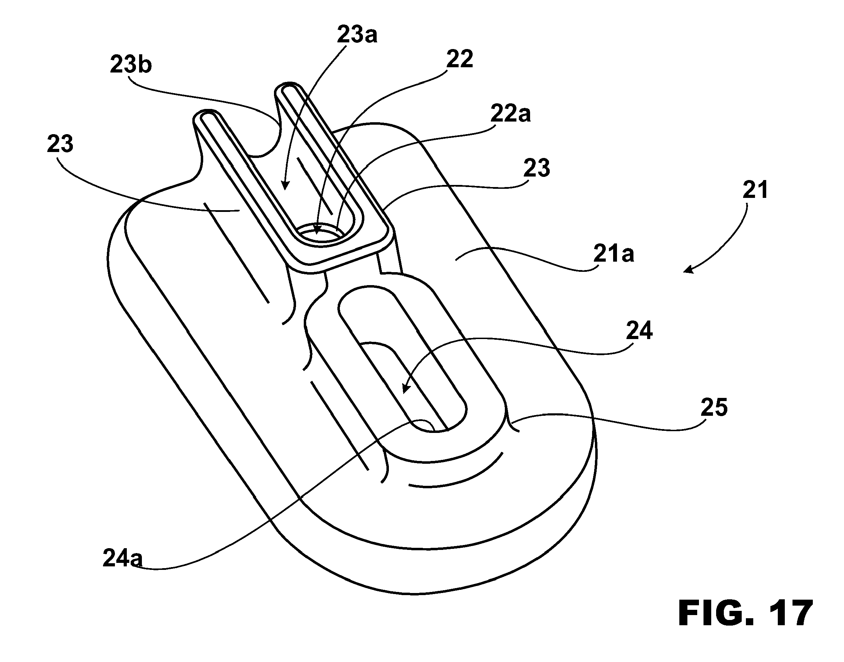

Figure 17 is a perspective view of the present insulator member which allows appreciating its constitution and components;

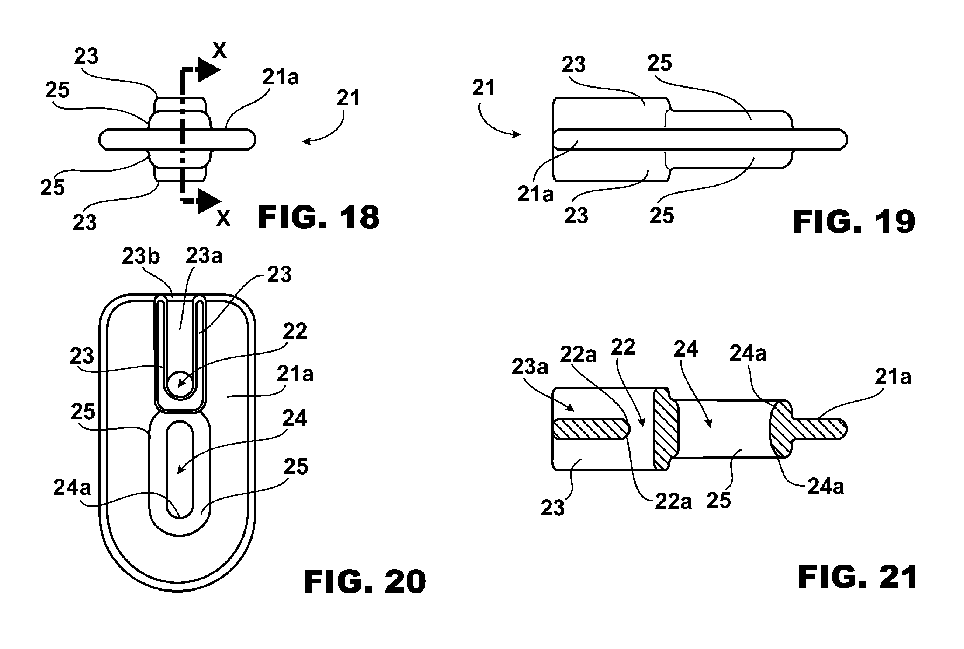

Figure 18 is a front elevated view of the insulator member of Figure 17;
Figure 19 is a lateral, elevated view of the insulator member of Figure 17 illustrating the flat main body as well as the form in which, from the larter, the thickening edge and the insulating wall are projected at different heights;
Figure 20 is a plan upper view of the insulator in Figure 17 wherein it can be observed the elongated configuration of the anchor passage opening, which allows the placement of the stretcher hook;
Figure 21 is a longitudinal section of the insulator, according to a section plane indicated as X-X in figure 18. The section plane allows observing the passages or openings, as well as the traction and separating portions of the main body;

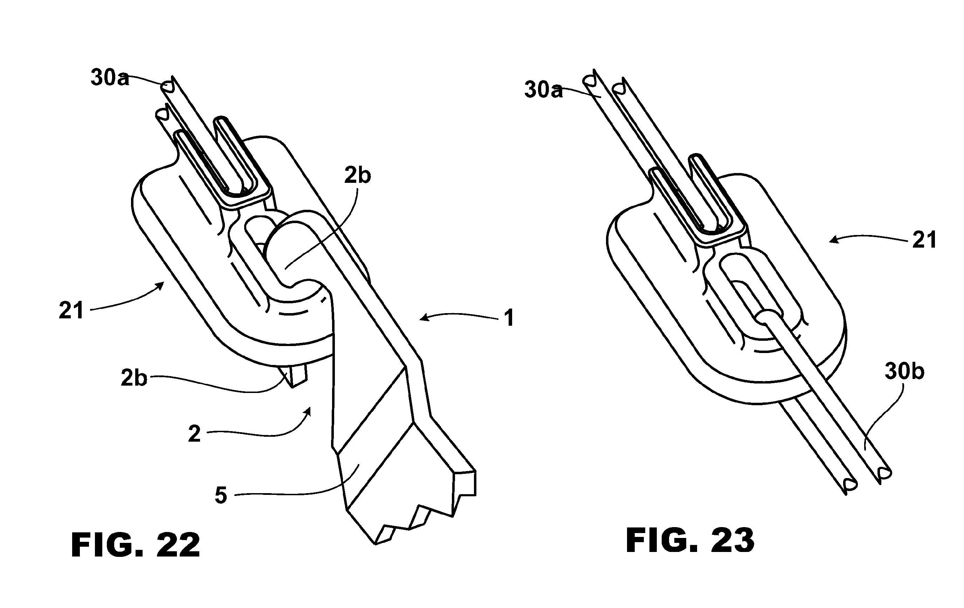

Figure 22 is a perspective view illustrating how the present insulator member allows the anchorage of the flat stretcher hook;
Figure 23 is another perspective view illustrating how the present insulator is also suitable for conventional use, relating electrified wires with stretcher wires;

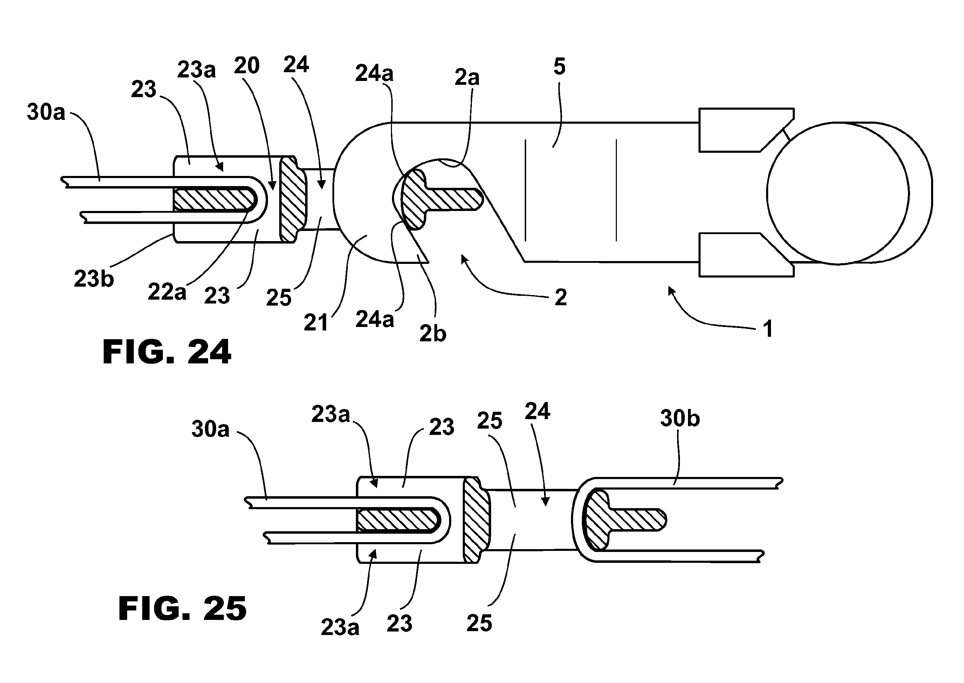

Figure 24 is another longitudinal section of the insulator member which illustrates in detail the insulator's relation with the hook of a stretcher, on the one hand, and with an electrified wire, on the other;
Figure 25 is another longitudinal section of the insulator which illustrates in detail the insulator's use in which it related to a strain wire, on the one hand, and with an electrified wire, on the other;

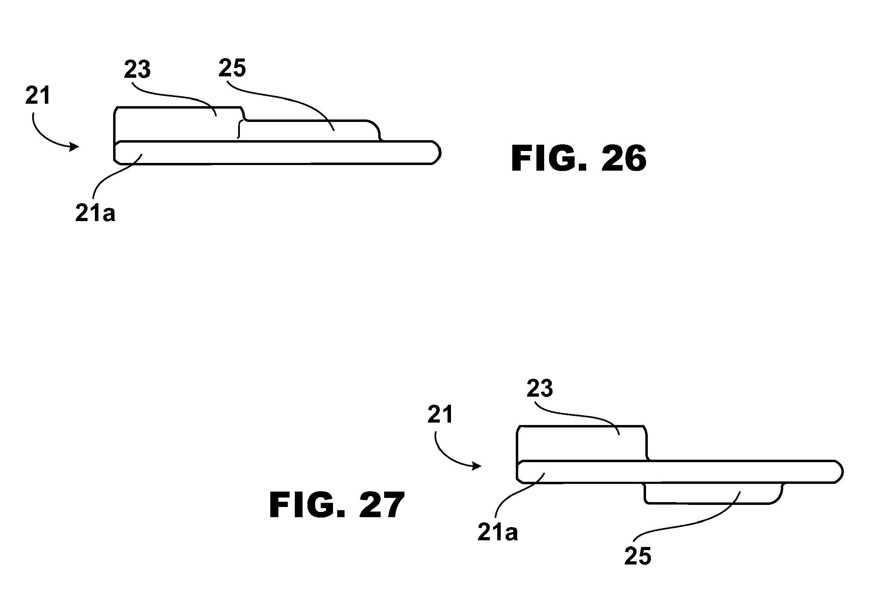

Figure 26 is a lateral, elevated view of the insulator in another embodiment in which the insulating fence and the thickening edge extend outwardly from only one face of the main body;and
Figure 27 is a lateral, elevated, view of the insulator in another embodiment in which the insulating fence and the thickening edge extend outwardly from opposite faces of the main body.

In the different figures, the same numbers and/or reference letters indicate the same or corresponding parts.

### REFERENCE NUMBERS IN DRAWINGS

(1) Main body [flat main body] of stretcher device.
   (1a) Lateral rims of the main body (1).
(2) Connection opening.
   (2a) Bottom of the connection opening (2).
   (2b) Anchor hook [formed by the connection opening (2)].
(3) Rotary mount opening.
   (3a) Bearing formed by the bottom of the rotary mount opening (3) [for the rotary part (6)].
(4) Recess slant rims.
(5) Alignment transverse ply [in the main body (1)].
(6) Rotary part [or rotary body].
(7) Winding up reel.
   (7a) Reel ledges (7).
   (7b) Head stop.
(8) Pin or rotation axis of the rotary part (6).
(9) Reel false retention wall (7).
   (9a) Wall mount opening (9).
   (9b) Anchor opening [for the filiform elements (30)].
   (9c) Second antirotary cramp means [on the false retention wall (9)].
(10) Retention end.
   (10a) First antirotary means ron the retention end (10)].
   (10b) Fixation means [of the false wall (9) on the end (10)].
(11) Winding up command head.
(12) Runner mobile cramp.
(13) Mobile cramp runner (12).
(14) Cramp fork.
(15) Cramp ledge.
(21) Insulator.
   (21a) Main body of the insulator (1).
   (21b) First traction portion [of the main body (1a)].
   (21c) Second traction portion [of the main body (1a)].
   (21d) Intermediate separating portion [of the main body (1a)]
(22) Insulating passage.
   (22a) Insulating outlet of the insulating passage (2).
(23) Insulating fence.
   (23a) Channeling throats formed by the insulating fence (3) .
   (23b) Channeling access opening to the throat (3a).
(24) Elongated anchor passage.
   (24a) Outlet rims of the anchor passage (4).
(25) Thickening edges.
(30) Filiform elements [wires].
   (30a) Electrified filiform elements.
   (30b) Anchor filiform elements.

### DETAILED DESCRIPTION

In general terms, the present invention refers to a side anchor stretcher device for filiform elements which comprises a winding up reel (7) with a false retention wall (9) which is mounted (9a) on the rotary body (6) with a cramp (10a) (9c) able to prevent its rotation and that possesses, at least, an anchor opening (9b) for the filiform element (30) to be stretched.

More particularly, the present side anchor stretcher device may be applied to stretch any type of filiform elements (30) such as, wires, ropes, threads and any other filiform element.

This side anchor stretcher device comprises a main body (1) limited by lateral rims (1a) and by ends, adjacent to which, there is a rotary mount opening (3) and a connection opening (2). At the bottom of the rotary mount opening (3), (FIG. 8), a bearing is formed (3a) on which a rotary part (6) is mounted (FIGS. 9-10).

This rotary part (6) forms a pin or rotation axis (8) in its central part. Towards one side, a winding up reel is formed (7) which has a threading hole (10) and a retention wall (9). Towards the opposite side of the rotation axis (8), (FIG. 6), there is a command head (11) which is useful to perform the winding up. This winding up head (11) fixes tightly into the cramp recess (15) formed by a fork (14) of the mobile cramp piece (3), (FIG. 10).

Different variant have been considered, for example, that the rotary part (6) comprises a rotary body in which the different parts [except the false retention wall (9)] constitute only one piece.

The above mentioned rotary part (6) comprises a command head (11) that may have different shapes but it mainly will allow assisting it to make it turn round. This command head (11) extends as far as the stop head (7b), adjacently to which some ledges are available (7a), that may be formed by deflection, impact, etc.

Between the stop head (7b) and the ledges (7a) a pin (8) or rotation axis of the rotary part is formed (6) which permits the latter to turn round in the rotary mount opening (3) of the main body (1).

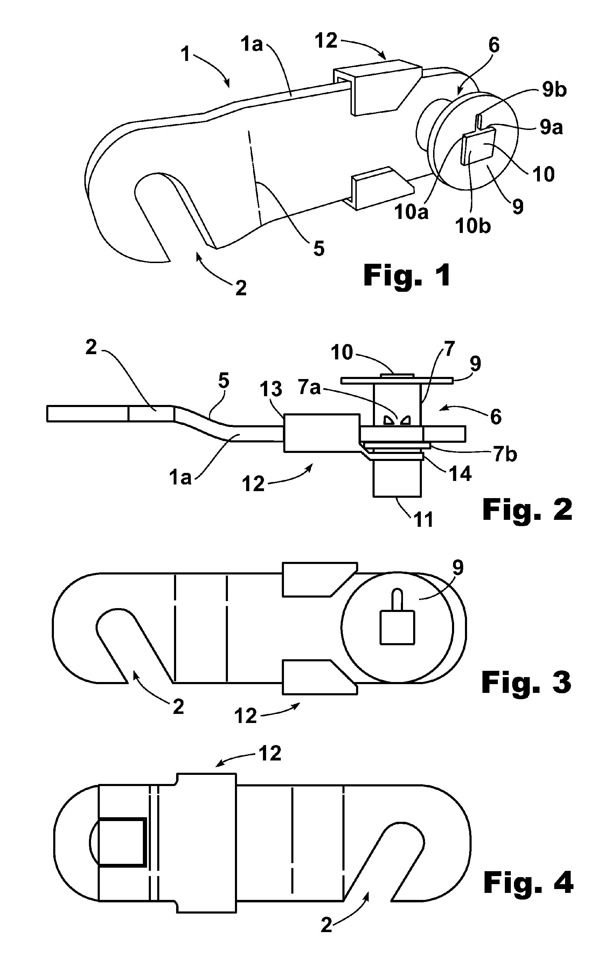

From the pin (8), the rotary part (6) forms the mobile part of the winding up reel (7) which ends at the retention end (10), (FIG. 2).

In this retention end (10) the false retention wall (9) is placed by inserting it through its mount opening (9a). The fixation of the mounting is performed with the fixation means (10b) [for example, a riveting of the retention end (10)].

The presence of the first antirotary cramp means (10a) [in the retention end (10)] together with the second antirotary cramp means (9c) [in the false retention wall (9)], form a rotation cramp (10a) (9c) that prevents the turning round of the false retention wall (9) with respect to said retention wall (10), (FIG. 11) .

On the other hand, the aboye mentioned false retention wall (9) may have one or more anchor openings (9b) on which the end of the filiform element (30) to be stretched can be inserted.

The mobile cramp piece (12) is slidingly railed on the lateral rims (1a) of the main body (1). For that purpose, it has some runners (13) that, in the present embodiment, are formed by some folds, (FIG. 2).

Finally, the main body (1) has an alignment transverse ply (5) which allows aligning the connection opening end (2) with the winding up reel (7).

The present side anchor stretcher device can be provided with an insulator member (21) that is applicable to electrified wirings and is intended to serve as an insulating buffer between filiform elements (30) -such as wires, ropes, threads, wires and any other equivalent element -and stretchers of the flat main body (1) wherein anchor opening (2) has the shape of a hook (2b).

The insulator member (21) comprises a main body (2Ia) made of an electrically insulating material, (FIG. 17),. such as ceramics, POM nylon (Polyoximethilene), acetal resin, and/or any other suitable material for that purpose.

In one of the possible embodiments, the insulator member (21) is provided with a set of passages or openings (22) (24) that pass through the main body (21a) . This set of passages (22)(24) comprise an insulating passage (22) and an elongated anchor passage (24).

The insulating passage (22) extends through the main body (21a) opening outside through each insulating outlet (22a) situated on its ends. Around the aboye mentioned insulating outlets (22a) are each of the insulating fences (23) which extend as far as the end of the main body (21a), so that they form some channeling throats (23a) for the electrified filiform element (30a), (FIGS. 17-21).

In addition, the elongated anchor passage (24) extends through the main body (21a) opening outside through each outlet rims (24a) situated on its ends. This elongated anchor passage (24) prolongs beyond the main body (21a) through each thickening edges (25).

The insulating fences (23) as well as the thickening edges (25) may project from one of the faces of the main body (21a), from both faces or from opposite faces. For example, the insulating fence (23) can be outstanding from one face of the main body (21a) and the thickening edge (25) can be outstanding from the opposite face.

Mainly, the aboye mentioned elongated anchor passage (24) has been created to be engageable with the anchor hook (2b) of the flat anchor of the stretcher device (1). In addition, the outlet edges (24a) are structured so that the anchor hook (2b) may engage the first portion (21b) of the main body (21a), which fits in the bottom (2a) of the anchor or connection opening (2) of the hook (2b).

In spite of that, an embodiment has been considered in which the insulating fences (23) are higher than the thickening edges (25). In this manner, the passages (22)(24) that extend through the main body (21a) define a structure having a first traction portion (21b) to one side, a second traction portion (21c) to the opposite side and an intermediate separating portion (21d) of the passages. With this arrangement, it is prevented that the aboye mentioned separating portion (21d) works at compression.

In the embodiment described, the two passages (22)(24) open on the same faces of the main body themselves (21a) so that both passages (22)(24) are simultaneously exposed if they are observed from the same observation point.

### Operation:

Once the stretcher device has been placed and the end of the filiform element (30) to be stretched has been introduced in the anchor opening (9b) of the retention wall (9), the conditions are ready to wind the element up on the winding up reel (7).

The winding up for stretching is performed by turning round the command head (11).

Since the anchor opening (9b) is situated laterally on the false retention wall (9), the filiform element (30) is wound up very evenly on the winding up reel (7).

Once the stretched winding is completed, the runner mobile cramp (12) moves to engage the command head (11) through the cramp recess (15) defined by the cramp fork (14). In these conditions, the rotary part (6) of the stretching device remains immobilized thereby maintaining the stretched condition.

Regarding the insulator member (21), the presence of the elongated anchor passage (24) allows inserting the anchor hook (2b) of the flat stretcher (1) therein. The thickening edges (25) allow, on the one hand, increasing the structural resistance of the main body (21a) in that sector and, on the other hand, that the outlet edges (24a) of the first traction portion (21b) fits suitably into the bottom (2a) of the anchor hook (2b).

The insulating fence (23) not only allows increasing the structural resistance of the main body (21a) in that sector, but it ensures the insulation of the electrified filiform element (30a) and its adequate arrangement into the channeling throats (23a) as far as its outlet extends through the respective intercrossing openings (23b), (FIG. 24).

Since the passages or openings (22)(24) do not intercross or overlap, this prevents the separating portion (21d) from being subject to compression due to the stretching action of the filiform element (30) and the hook (2b) of the stretcher device (1). In these conditions, the referred hook (2b) subjects to traction the fist traction portion (21b), whereas the electrified filiform element (30) subjects to traction the second traction portion (21c).

Finally, it is relevant to mention that the presence of the insulating fences (23) and thickening edges (25) provide the insulator member with a structural resistance that permits the main body (21a) to possess a lower mass without decreasing the structural resistance or the insulating capacity of the insulator member.

### Method:

The present invention also refers to a method of production to produce the present stretcher which comprises a series of steps by which the components of the stretcher are produced and mounted together and, in the case of the rotary part (6), an end is produced (10) with a rotary cramp (10a) (9c) on which it is mounted (9a) a false retention wall (9) with which the winding up reel is formed (7).

More particularly, the method comprises a first stage wherein a main body of the stretcher (1) is produced including a connection opening (2), a rotary mount opening (3) and an alignment ply (5). The offset ply (5) allows folding the main body (1) towards one side, so that the connection opening (2) remains aligned with the wind up reel (7).

On the other hand, it is produced a runner mobile cramp (12) able to move on the rims (1a) of the main body (1) .

A rotary part (6) is also produced, which is ready to be mounted on the rotary mount opening (3) and that should be provided with a command head (11) and an end (10) with first rotation cramp means (10a). A false retention wall (9) is also produced which is provided with a mounting opening (9a) and one or several anchor openings (9b) for filiform elements (30). These anchor openings (9b) may be independent or consisting of prolongations of the mounting opening (9a).

The mounting opening (9a) may have different configurations but the condition will be that it forms second rotary cramp member (9c) that, in cooperation with the first rotary cramp member (10a) on retention end (10) provided by the rotary part (6), prevents the displacement in relation to both parts (9)(6).

Thus, the runner mobile cramp (12) is mounted in the main body (1) and moves until releasing the access to the connection opening (2).

Then the rotary part (6) is introduced in the rotary mount opening (3) of the main body (1), until forming a wind up reel (7).

Finally, the false retention wall (9) is mounted and fixed -for example by means of riveting- in the retention end (10) with rotation cramp (10a) (9c) of the rotary part (6).

Upon putting the present invention into practice, modifications may be introduced regarding certain construction details and form, without leaving the essential principles that are clearly explained in the claims below:

## Claims

1. A side anchor stretcher device for stretching filiform elements such as wires, ropes, threads and any other filiform element, comprises:
- a main body portion having ends with an opening adjacent each of the ends thereof, with said openings including a connection opening and a rotary mounting opening;
- a rotary member including a command head which forms a wind up reel for the filiform element to be stretched and is rotary mounted in said rotary mounting opening,
- said wind up reel comprises a false retention wall mounted on the rotary member with a cramp able to prevent the rotation of said retention wall with respect to said rotary member;
- said false retention wall pro vides at least one anchor opening for the filiform element; and
- a runner mobile cramp mounted on said rotary member and engageable with said command head to immobilize the same.-

2. The side anchor stretcher device in accordance with claim 1, wherein the rotary member comprises ledges that limit the mobile part of the bearing which fixed part is provided with an opening on the main body.-

3. The side anchor stretcher device in accordance with claim 2, wherein, at least, one of the ledges of the bearing is produced by deflection.-

4. The side anchor stretcher device in accordance with claim 1, wherein, the false retention wall is related to the mobile body through an antirotary cramp and fixation member.

5. The side anchor stretcher device in accordance with claim 1, wherein the false retention wall comprises, at least, an anchor opening defined by a prolongation of the mount opening.-

6. The side anchor stretcher device in accordance with claim 1, wherein the false retention wall comprises an anchor opening that extends with, at least, a split that forms the anchor opening.-

7. The side anchor stretcher device in accordance with claim 1, wherein the reel is composed by the rotary member and the false retention wall which are on the opposite side to the command end of said rotary member.-

8. The side anchor stretcher device in accordance with claim 1, wherein the reel is composed by the rotary member, the false retention wall and the adjacent sector of the main body, on the opposite side of the command end of said rotary member.-

9. The side anchor stretcher device in accordance with claim 1, wherein the rotary member comprises a stop head that, adjacent to the command end, limits the insertion of said rotary member through the main body.-

10. The side anchor stretcher device in accordance with claim 1, wherein the rotary member comprises, at least, a head stop which is formed by deflection of said rotary member.-

11. The side anchor stretcher device in accordance with claim 1, wherein the rotary member comprises a rotary body on which end, a false retention wall is mounted, said mounting including a rotation cramp.-

12. The side anchor stretcher device in accordance with claim 1, which comprises an insulator intended to serve as an insulating relation between the flat hook formed by the connection opening and electrified filiform elements, comprising:
- a main body made of electrically insulating material;
- a set of separate passages ready to relate to said filiform elements and to said hook;and
- a set of passages that, without intercrossing, go through the main body, said set of passages including at least one insulating passage ready to be passed through by filiform elements and at least one elongated anchor passage ready to be passed through by the hook formed by the connection opening, said passages are on opposite sides of the main body, so that the structure of said main body worked normally subject to traction.-

13. The side anchor stretcher device in accordance with claim 12, which comprises an insulator in which at least one of the passages comprises insulating fence of its extreme openings.-

14. The side anchor stretcher device in accordance with claim 12, which comprises an insulator in which, at least, one of the passages comprises thickening edges.-

15. The side anchor stretcher device in accordance with claim 12, which comprises an insulator wherein the passages pass through the main body without intercrossing, defining in said main body, a first traction portion of traction towards one side, a second traction portion towards the opposite side and an intermediate separating portion of the passages.-

16. A method of production of the side anchor stretcher device in accordance with claim 1, comprises the following stages:
- producing a main body that comprises a connection opening and a rotary mount opening;
- producing a runner mobile cramp able to move on said main body;
- producing a rotary member that, provided with a command head and an end with a rotation cramp, be able to mount on said rotary mount opening;
- producing a false retention wall provided, with, at least, one anchor opening for filiform elements;
- mounting said runner mobile cramp in said main body until releasing the access to the connection opening;
- introducing said rotary member in the connection opening of said main body, until forming a winding up reel for filiform elements; and
- mounting and fixing said false retention wall in the end with rotation cramp of the rotary body.

17. The method of production in accordance with claim 16, which comprised the following stages:
- producing a main body that comprises a connection opening, a rotary mount opening and an alignment ply to align said connection opening with the winding up reel;
- producing a runner mobile cramp able to move on said main body on the opposite side to the misalignment side of said connection opening;
- producing a rotary member that, provided with a command head and an end with a rotation cramp, be able to mount on said rotary mount opening;
- producing a false retention wall provided, with, at least, one anchor opening for filiform elements;
- mounting said runner mobile cramp on the opposite side to the alignment of said connection opening and displace it until releasing the access to the connection opening;
- introducing said rotary member in the connection opening of said main body, until forming a winding up reel for filiform elements; and
- mounting and fixing said false retention wall in the end with rotation cramp of the rotary body.

18. The method of production in accordance with claim 16, wherein the stage of producing the rotary member comprises to produce a rotary stop that limits its insertion in the rotation opening of the main body.

19. The method of production in accordance with claim 16, wherein after introducing the rotary member in the rotary mount opening of the main body, it comprises to form at least one ledge of the bearing which prevents the axial displacement of said rotary body and enables its rotary movement on said rotary mount opening.

20. The method of production in accordance with claim 16, wherein the stage of producing the rotary member comprises to produce ledges and/or recesses in the character of rotation cramp of the false retention wall relative to the rotary body.
